(19) Europäisches Patentamt / European Patent Office / Office européen des brevets

(11) **EP 2 010 955 B1**

(12) **FASCICULE DE BREVET EUROPEEN**

(45) Date de publication et mention de la délivrance du brevet:
**31.08.2016 Bulletin 2016/35**

(51) Int Cl.:
**G02B 27/01** *(2006.01)*   **G02B 27/02** *(2006.01)*
**G02B 27/22** *(2006.01)*

(21) Numéro de dépôt: **07731950.7**

(86) Numéro de dépôt international:
**PCT/FR2007/051177**

(22) Date de dépôt: **26.04.2007**

(87) Numéro de publication internationale:
**WO 2007/125257 (08.11.2007 Gazette 2007/45)**

(54) **PILOTE POUR AFFICHEUR COMPORTANT UNE PAIRE DE LUNETTES DE TYPE BINOCULAIRE**

STEUERGERÄT FÜR BINOKULAR BRILLEN

DRIVER FOR DISPLAY COMPRISING A PAIR OF BINOCULAR-TYPE SPECTACLES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.04.2006 FR 0651481**

(43) Date de publication de la demande:
**07.01.2009 Bulletin 2009/02**

(73) Titulaire: **ESSILOR INTERNATIONAL (Compagnie Générale d'Optique) 94227 Charenton le Pont (FR)**

(72) Inventeur: **MOLITON, Renaud décédé (FR)**

(74) Mandataire: **Lenne, Laurence et al Ipsilon Le Centralis 63, avenue du Général Leclerc 92340 Bourg-la-Reine (FR)**

(56) Documents cités:
**WO-A-99/37098     FR-A- 2 780 517
US-A- 5 506 705     US-A- 5 579 026
US-A- 5 731 902     US-A1- 2001 030 715
US-B1- 6 449 309**

**EP 2 010 955 B1**

**Description**

La présente invention se rapporte à un pilote pour un afficheur comportant une paire de lunettes de type binoculaire et équipé d'un imageur optique pour chaque oeil destiné à permettre la projection d'informations, de type images ou multimédia.

Le mot « binoculaire » désigne un afficheur assurant la réalisation d'une image virtuelle pour chaque oeil du porteur.

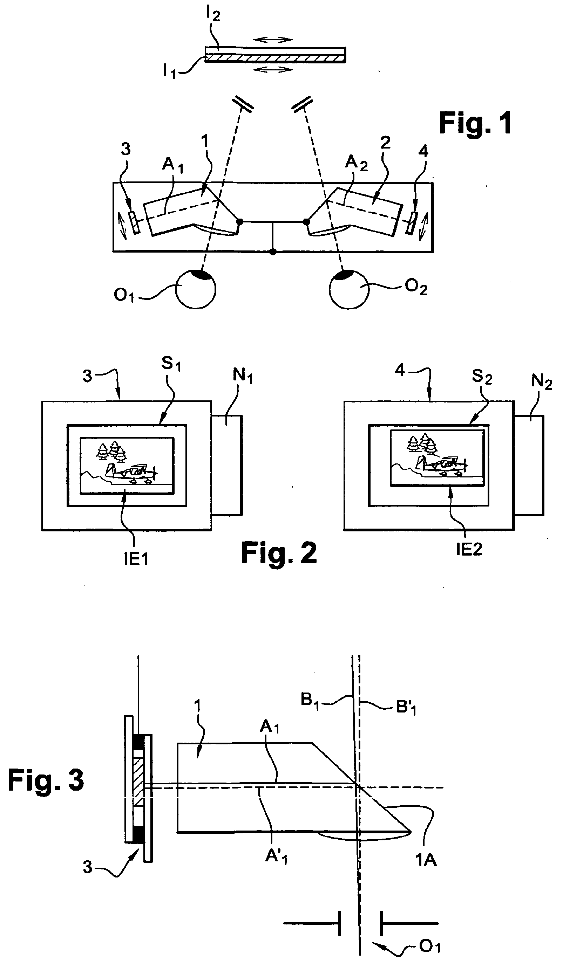

Un tel afficheur binoculaire connu est représenté sur la figure 1.

Dans cet afficheur, les imageurs optiques 1, 2 sont destinés à mettre en forme les faisceaux optiques issus d'un système électronique et optique de génération de faisceaux lumineux à partir d'un écran miniature 3, 4. Chaque imageur optique dirige les faisceaux optiques vers chaque oeil du porteur 01, 02 pour permettre la visualisation du contenu informationnel.

Dans un tel afficheur, un signal électronique porteur d'une information est amené à chaque écran miniature par un câble. A partir de ce signal, l'écran miniature, éclairé par un projecteur de fond, génère une image pixellisée correspondant à l'information. A titre d'exemple, il peut être utilisé un écran « KOPIN Cyberdisplay 320 color » générant des images de 320. x 240 pixels et d'une dimension de 4,8 mm x 3,6 mm. Les écrans sont référencés au moyen d'une interface mécanique par rapport aux imageurs optiques. Une coque de protection protège tout ou partie de l'ensemble.

Pour une bonne visualisation avec un tel afficheur, il est important que l'image I1 vue par l'oeil gauche et l'image I2 vue par l'oeil droit soient superposées.

Actuellement, afin d'aligner ces images droite et gauche d'un afficheur binoculaire, il existe au niveau du procédé d'assemblage une étape qui consiste à déplacer physiquement les écrans miniatures 3, 4 perpendiculairement à l'axe optique A1, A2 des imageurs optiques, de façon à déplacer au moins une des images virtuelles de façon correspondante et ainsi amener la superposition des images droite et gauche.

Plus précisément, le principe d'alignement connu consiste à fixer le premier écran, par exemple le gauche 3 par rapport à l'imageur gauche 1, typiquement par collage, puis à déplacer l'écran droit 4 perpendiculairement à l'axe optique A2 de l'imageur droit pour amener l'image droite en coïncidence avec l'image gauche et ceci fait, à le bloquer en position alignée par un collage.

Ce type de solution nécessite la conception de coques ou de carters permettant ce déplacement transversal des écrans miniatures pour ce réglage, ainsi qu'un système de blocage temporaire avant la fixation définitive par un collage.

Ce procédé exige une étape longue et délicate du point de vue de la manipulation, ce qui signifie en pratique des difficultés à obtenir un bon rendement.

Il peut être envisagé un système d'alignement des images droite et gauche qui ne nécessite aucun déplacement physique des écrans miniatures et donc a l'avantage de permettre un agencement de carter plus simple, tout en fiabilisant et simplifiant l'étape d'alignement lors du procédé de montage et de mise au point.

Dans ce cas, les écrans miniatures présentent une surface active plus grande que ladite surface déterminée de l'image émise et le procédé de réglage de l'afficheur consiste alors à déplacer électroniquement l'image émise sur l'écran, afin d'obtenir une position réglée de cette image dans cet écran correspondante à une superposition des deux images virtuelles.

De préférence, l'afficheur binoculaire comporte un imageur intégré dans chaque lentille d'une paire de lunettes et recevant les faisceaux optiques d'un dispositif de génération de faisceaux comprenant un dit écran miniature.

Ce type d'agencement est particulièrement avantageux dans le cas de cette application.

En effet, les dispositifs de génération contenant chacun une partie du système optique et un écran, peuvent être les plus petits possibles puisqu'il n'est plus nécessaire de leur ajouter un système mécanique de réglage transverse de la position de l'écran miniature.

L'intérêt de réaliser un déplacement électronique de l'image est de pouvoir le réaliser avec le capot fermé et donc au dernier moment, dans un environnement peu contraignant car ne nécessitant pas de précaution de propreté ni d'outils.

Un autre intérêt est de ne pas avoir à physiquement toucher le système lors du réglage et donc de diminuer les erreurs et d'augmenter la rapidité de convergence du réglage de fusion. Le réglage de fusion est donc ainsi plus fiable.

Afin d'assurer un confort maximal au porteur d'un tel afficheur, il est préférable de réaliser ce réglage pour chaque porteur selon ses propres caractéristiques optiques, et en particulier selon son écart interpupillaire. Le document US 5,579,026 divulgue un pilote d'écrans d'afficheur binoculaire comprenant des moyens de compensation permettant de déplacer les images oeil droit et oeil gauche.

L'invention propose donc un pilote d'écrans miniatures d'un afficheur binoculaire comprenant toutes les caractéristiques récitées dans la revendication 1.

Un tel pilote ou boîtier de commande forme une interface entre un ordinateur lui transmettant les paramètres de compensation définis au moyen d'un banc de réglage et les écrans miniatures de l'afficheur, en situation de réglage chez un installateur, et également une interface entre une source d'images et l'afficheur, en situation de lecture par un utilisateur. Ce pilote permet donc aisément de modifier le réglage des écrans miniatures, selon le porteur, afin d'obtenir un parfait alignement des images virtuelles.

Des modes de réalisation additionnels sont définis dans les revendications dépendantes.

Selon le mode de réalisation préféré de l'invention, le pilote comporte un circuit de compensation et un circuit de déplacement d'affichage d'une image transmise par ladite source au circuit d'affichage du dit écran.

De préférence, ledit circuit de compensation comprend une CPU assurant une fonction de gestion de la compensation consistant à mettre en mémoire lesdits paramètres de compensation ainsi que des paramètres de formules de calcul de ces paramètres de compensation.

Avantageusement, ladite CPU assure un contrôle d'erreur et de correction desdits paramètres de compensation.

Ladite CPU peut également assurer une fonction de gestion de rebouclage vidéo consistant à générer une image fixe de test mise en mémoire au préalable dans le pilote par ledit ordinateur.

Avantageusement, la mise en mémoire des paramètres de compensation leur associe un identifiant d'utilisateur dans un profil de compensation personnalisé.

De préférence, ledit circuit de déplacement comprend une GPU assurant une fonction de traitement d'image effectuant en continu et en temps réel le déplacement électronique de l'image.

Ladite fonction de traitement d'image peut consister en une rotation d'image propre à chaque écran miniature et en une translation d'image propre à chaque écran miniature.

Ladite fonction de traitement d'image peut comporter également un désentrelacement d'image commun aux deux écrans miniatures.

Le pilote conforme à l'invention comporte une interface homme machine permettant à un utilisateur de sélectionner un profil de compensation personnalisé.

Ladite interface homme machine peut permettre à un utilisateur de sélectionner un mode de désentrelacement.

Il est défini un procédé de détermination desdits paramètres de compensation nécessaires au déplacement de l'image émise sur les écrans et consistant à enregistrer lesdits paramètres de compensation dans ledit pilote tel que précisé ci-dessus, caractérisé en ce qu'il consiste à utiliser au moins une ou deux caméras positionnables de sorte que la pupille d'entrée de l'objectif de celle(s)-ci se trouve au voisinage de la position de la pupille de chaque oeil du porteur.

De préférence ce procédé comprend une première étape de calibrage consistant à stocker en mémoire les coordonnées de calibrage du centre d'une cible par rapport à l'axe optique de chaque caméra.

Deux caméras peuvent être utilisées et le procédé peut comporter une étape préalable de convergence des axes optiques des dites caméras sur ladite cible commune.

Le procédé peut consister à installer ledit afficheur devant lesdites caméras, chacun des deux écrans miniatures émettant une dite image de surface déterminée et comprend les étapes suivantes pour chaque caméra :

- acquisition de l'image,
- calcul du centre de l'image,
- calcul du vecteur de correction présent entre ledit centre de l'image et l'axe optique de la caméra, en tenant compte des dites coordonnées de calibrage.

Ledit dispositif peut comporter un ordinateur de commande d'un banc d'alignement destiné à être connecté au dit pilote.

L'invention est décrite ci-après plus en détail à l'aide de figures ne représentant qu'un mode de réalisation préféré de l'invention.

La figure 1, vue de dessus d'un afficheur connu, a déjà été précisée plus haut.
La figure 2 est une vue de face de deux écrans miniatures conforme à l'invention.
La figure 3 est une vue de dessus d'un imageur et d'un écran miniature conforme à l'invention.
La figure 4 est une vue de dessus d'un banc de réglage pour la mise en oeuvre du procédé.
La figure 5 représente un protocole d'algorithme d'alignement pour la mise en oeuvre du procédé conforme à l'invention.
La figure 6 représente l'architecture matérielle pour la mise en oeuvre de ce protocole.
La figure 7 est une vue de face d'un écran miniature conforme à l'invention.
La figure 8 représente le protocole d'algorithme d'alignement pour la mise en oeuvre du procédé conforme à l'invention avec un autre type d'afficheur binoculaire.
La figure 9 est une vue en perspective du boîtier d'un pilote conforme à l'invention.
La figure 10 est un schéma de ce pilote et de ses connexions.
La figure 11 est un diagramme des flux de données d'une CPU, partie du pilote.
La figure 12 est un diagramme des flux de données d'une GPU, partie du pilote.

La figure 13 est un diagramme synoptique électronique du pilote conforme à l'invention.

La figure 2 illustre le concept général de l'invention.

Un afficheur de type binoculaire conforme à l'invention comprend, pour chaque oeil du porteur, un imageur optique 1, 2 destiné à mettre en forme des faisceaux optiques correspondant à une image de surface déterminée IE1, IE2 émise des écrans miniatures 3, 4 fixes, pourvus chacun d'un pilote d'affichage connecté par exemple par une nappe d'adressage N1, N2 et à les diriger vers chaque oeil du porteur O1, O2 pour permettre la visualisation d'un contenu informationnel contenu dans une image virtuelle I1, I2.

Selon l'invention, au moins un des dits écrans miniatures, et de préférence les deux écrans 3, 4, présentent une surface active S1, S2 plus grande que la surface déterminée de l'image émise IE1, IE2. A titre d'exemple, pour afficher une image de 640 x 480 pixels, on peut utiliser un écran de surface active égale à 690 x 530 pixels, soit 50 pixels de plus autour de la surface déterminée de l'image.

Sur la figure 2, l'image émise IE1 par l'écran de gauche 3 est centrée sur la surface active S1 de l'écran 3 et l'image émise IE2 par l'écran de droite 4 est décalée de la position centrale.

Le procédé de réglage conforme à l'invention d'un tel afficheur consiste à déplacer l'image émise IE dans l'écran, afin d'obtenir une position réglée de cette image dans cet écran correspondante à une superposition des deux images virtuelles droite et gauche I1, I2.

Ce procédé est illustré sur la figure 3.

Sur cette figure est représenté l'axe optique A'1 correspondant à une image émise au centre de l'écran miniature 3. Après traitement par un agencement optique, tel qu'un miroir 1A, ces faisceaux optiques sont dirigés vers l'oeil 01 du porteur et une image virtuelle est visible centrée sur l'axe B'1.

Il apparaît que par un déplacement de l'image émise par l'écran, de préférence transversalement par rapport à un axe optique A1, l'image virtuelle obtenue est déplacée et centrée sur l'axe B1. Dans d'autres termes, la position dans l'espace et l'angle d'affichage du centre de l'image virtuelle sont modifiés

Par déplacement de l'image émise par l'écran, est donc réalisé un déplacement sensiblement équivalent à un déplacement de l'image virtuelle résultante et par ce procédé il peut être obtenu un réglage des deux images droite et gauche issues de l'utilisation d'un afficheur binoculaire, afin d'obtenir une superposition ou fusion optimale de celles-ci.

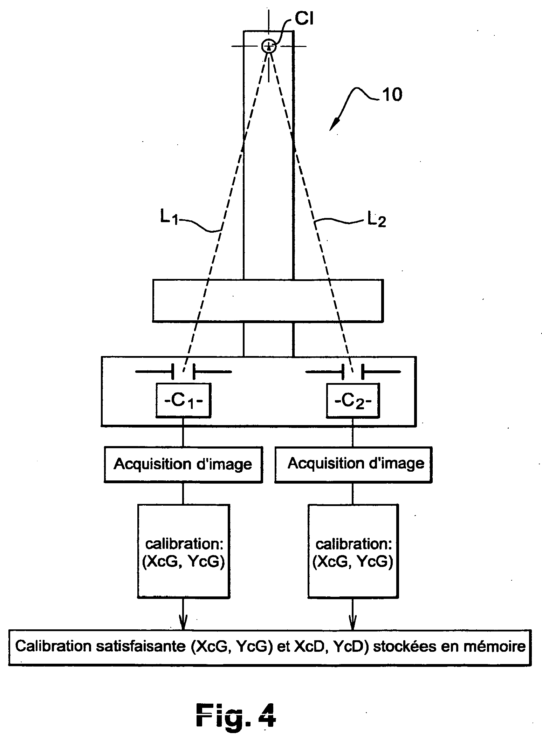

La figure 4 représente un banc de réglage pour la mise en oeuvre du procédé conforme à l'invention.

Dans un premier temps, le procédé consiste à simuler chaque oeil par une caméra C1, C2, et comprend une première étape de calibrage consistant à :

- faire converger les axes optiques L1, L2 des caméras sur une cible commune CI,
- stocker en mémoire les coordonnées de calibrage du centre de cette cible CI par rapport à l'axe optique de chaque caméra.

Un banc d'alignement 10 est calibré au préalable en faisant converger les axes optiques des caméras droite C1 et gauche C2 sur la cible de convergence CI. Ce réglage est obtenu au moyen de dispositifs opto-mécaniques adéquats et de l'acquisition de l'image par les caméras. On utilise un algorithme de détection du motif de la mire de convergence CI et on extrait sa coordonnée de centre que l'on appellera $(XcG, YcG)$ pour la caméra gauche et $(XcD, YcD)$ pour la caméra droite. Le système est bien réglé lorsque ces coordonnées sont les plus proches possibles du point $(0,0)$. Il est possible de connaître la précision de réglage du système opto-mécanique exprimée en pixels : cette donnée s'obtient soit par un calcul de tolérances opto-mécaniques, soit par l'expérience pratique via des protocoles connus de l'homme de l'art.

Appelons $Xp$ la précision selon l'axe X et $Yp$ celle selon l'axe Y exprimées en pixels sur les détecteurs des caméras. On considère que le banc est bien calibré lorsque $XcG$ et $XcD$ sont inférieurs à $Xp$, et lorsque $YcG$ et $YcD$ sont inférieurs à $Yp$.

Cette précision de réglage doit être choisie telle qu'elle permette de garantir une bonne fusion des images virtuelles. Le banc de réglage de fusion sera donc impérativement tel que :

$$2 \cdot \text{Pitch\_caméra} \cdot (Xp^2 + Yp^2)^{(1/2)} / \ EFL(camera) = \text{tolérance angulaire de fusion finale} / N,$$

où EFL(camera) étant la focale effective de la caméra,
« Pitch_camera » étant la taille d'un pixel de la caméra,
et $1/N$ est la fraction du budget de tolérance totale que l'on veut consommer sur ce poste, par exemple $1/2$.

De préférence, on conçoit le banc et ses réglages tels que la sensibilité finale d'ajustement soit inférieure ou égale à 1 pixel.

Un ordinateur stocke alors en mémoire les coordonnées (XcG, YcG) et (XcD, YcD). Elles désignent alors les points vers lesquels doit converger le réglage du binoculaire.

Un principe alternatif peut n'utiliser qu'une seule caméra qui est translatée entre les deux positions droite et gauche. La même caméra est alors translatée d'une valeur connue de déplacement entre les deux positions droite et gauche.

Il n'est alors pas besoin d'alignement sur une cible de convergence, les valeurs (XcG, YcG) et (XcD, YcD) correspondant directement à la position de l'image de la cible sur la caméra, l'axe optique de la caméra étant réglé par ailleurs perpendiculairement à la direction de translation, et la cible étant positionnée sur la médiatrice du segment formé par les deux positions de la caméra.

Un principe alternatif peut n'utiliser qu'une seule caméra et un système de prismes et de miroirs calibrés combinant les images droite et gauche en une seule.

Dans un second temps, le procédé consiste à installer l'afficheur devant les caméras C1, C2, chacun des deux écrans miniatures 3, 4 émettant une image de surface déterminée et comprend les étapes suivantes pour chaque caméra :

- acquisition de l'image,
- calcul du centre de cette image,
- calcul du vecteur de correction présent entre le centre de l'image et l'axe optique de la caméra, en tenant compte des dites coordonnées de calibrage,
- enregistrement des vecteurs de correction dans un circuit de compensation du pilote d'affichage de chaque écran miniature de l'afficheur.

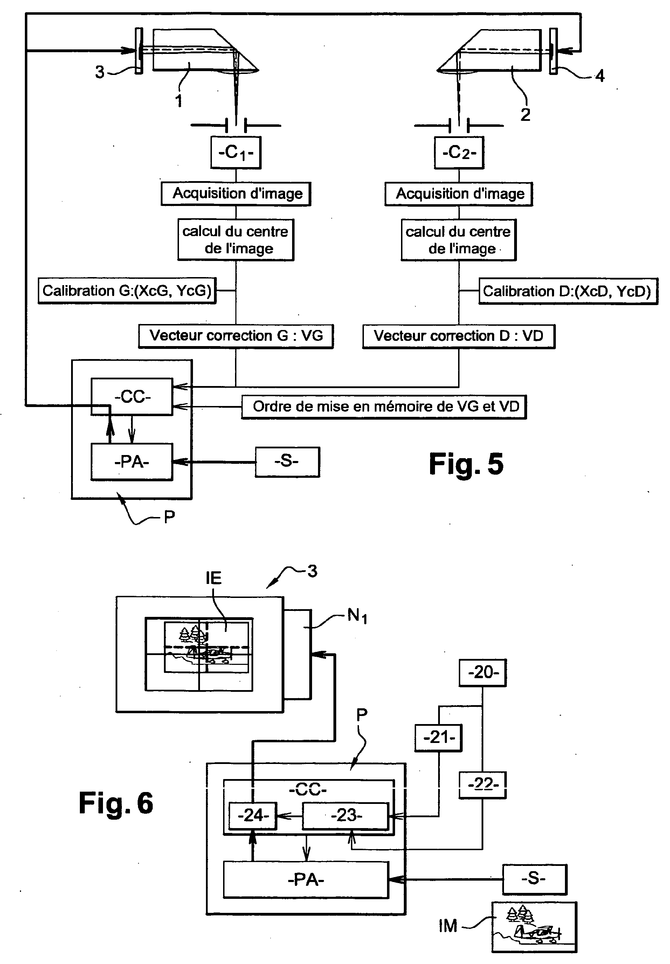

La figure 5 représente ce protocole d'algorithme d'alignement.

La construction mécanique du banc d'alignement et le montage de l'afficheur assurent que les axes X et Y des écrans miniatures 3, 4 et des détecteurs des caméras C1, C2 soient respectivement alignés, en considérant un axe optique déplié.

Pendant la procédure d'alignement, on affiche sur les écrans droit et gauche 3, 4 une image alimentée par une source d'image S et qui sert de cible d'alignement. De préférence, sa forme est étudiée à cet effet, il s'agit par exemple d'une croix passant par le centre de l'image.

Avec les caméras C1, C2, on fait une acquisition d'image sur chaque voie, droite et gauche. On repère ensuite la position du centre de la croix, soit manuellement, soit automatiquement via un algorithme de traitement d'image. On note ces positions (XiG, YiG) et (XiD, YiD) pour l'image gauche et l'image droite.

Ensuite, un programme calcule les vecteurs suivants de façon simple:

$$VG\_a = (XiG\text{-}XcG,\ YiG\text{-}YcG)$$

$$VD\_a = (XiD\text{-}XcD,\ YiD\text{-}YcD)$$

Ensuite, il calcule les vecteurs VD et VG de compensation ou de correction pour l'image gauche et l'image droite de la façon suivante :

$$VG = -[(XiG\text{-}XcG).RxG,\ (YiG\text{-}YcG)\cdot RyG]$$

$$VD = -[(XiD\text{-}XcD).RxD,\ (YiD\text{-}YcD)\cdot RyD]$$

où RxG et RxD sont les rapports de grandissement d'un pixel de l'écran miniature sur un pixel du détecteur de la camera le long de l'axe X pour les caméras gauche et droite respectivement.

Il est à noter que dans le cas général, la valeur absolue du grandissement le long de l'axe X et celle le long de l'axe Y sont suffisamment proches pour être considérées comme identiques.

Par contre, le signe de ces deux grandeurs peut être différent, notamment dans le cas où le système optique des lunettes binoculaires, à savoir l'imageur 1, 2, contient des miroirs.

On définit alors :

- « signX » est le signe du grandissement transversal horizontal qui dépend de la combinaison optique et dont la prise en compte est importante dans le calcul du vecteur de compensation. Ce signe est déterminé par la connaissance de la combinaison optique ;
- « signY » est le signe du grandissement transversal vertical qui dépend de la combinaison optique et dont la prise en compte est importante dans le calcul du vecteur de compensation. Ce signe est déterminé par la connaissance de la combinaison optique

Les valeurs s'expriment alors sous la forme :

RxG = RG.signX et respectivement RxD = RD.signX
RyG = RG.signY et respectivement RyD = RD.signY

où R est le rapport de grandissement d'un pixel de l'écran miniature sur un pixel du détecteur de la caméra, RG et RD désignant respectivement sa valeur pour la caméra gauche et la caméra droite. Une bonne façon de l'évaluer est de faire une moyenne sur toute l'image :

$$R = Rx = (\text{largeur de l'image en pixels sur l'écran miniature}) / (\text{largeur de l'image en pixels sur la caméra})$$

On peut aussi l'évaluer sur la hauteur

$$R = Ry = (\text{hauteur de l'image en pixels sur l'écran miniature}) / (\text{hauteur de l'image en pixels sur la caméra}).$$

On peut également moyenner les deux : R = (Rx + Ry)/2.

Par exemple, pour un écran miniature VGA : |R| = 640/A où A est la mesure du nombre de pixels qu'occupe l'image affichée par l'optique sur la caméra.

R peut aussi être évalué théoriquement ou pratiquement par la mesure du grandissement transverse GYimageur de la conjugaison écran miniature - image virtuelle à travers l'imageur et du grandissement transverse GYcam de la conjugaison image virtuelle-CCD camera à travers l'objectif de la caméra.

On a alors pour une camera donnée :

$$R = Pitch\mu D/(GYpipe \cdot GYcam \cdot PitchCCD)$$

où $Pitch\mu D$ est la taille du pixel de l'écran miniature et PitchCCD celle du détecteur de la caméra.

Ces vecteurs VD et VG sont ensuite dirigés vers le pilote P des écrans miniatures 3, 4 et plus particulièrement vers des circuits spécifiques dédiés à la compensation de l'écart d'alignement droite-gauche CC. Ces circuits sont au nombre de deux, un pour chaque écran miniature, et ont pour but d'une part de stocker les valeurs des vecteurs de correction VD et VG respectivement et d'autre part de transformer le signal de sortie des circuits d'affichage primaire PA en fonction de ces vecteurs de correction.

Chaque circuit ou pilote d'affichage PA primaire adresse les pixels de l'écran à partir de la donnée de l'image à afficher et redirige ses données de sortie vers le circuit de compensation CC.

La figure 6 représente l'architecture matérielle pour la mise en oeuvre de ce protocole.

Sur cette figure n'est représenté qu'un seul écran miniature 3.

Un ordinateur de commande du banc d'alignement 20 est connecté à une unité de transfert du vecteur de correction 21 vers une unité de mémoire 23 du pilote P de l'écran 3. Il est également relié à un canal de commande de mémoire 22 comportant une unité de remise à zéro destinée à remettre à zéro le vecteur de correction stocké dans l'unité de mémoire 23 du circuit de compensation CC et un additionneur destiné à ajouter la valeur du vecteur de correction à la valeur stockée dans cette même unité de mémoire 23.

Un circuit de translation 24 de l'affichage de l'image translate une image IM transmise par la source S au circuit ou pilote d'affichage PA, de la valeur du vecteur de correction stocké dans l'unité de mémoire 23. Ce circuit 24 transmet l'image translatée IE à l'écran miniature 3.

En effectuant des boucles d'alignement successives, on peut obtenir une meilleure précision en compensant les non-linéarités des grandissements des systèmes optiques. En pratique, il suffit d'additionner les vecteurs de correction des boucles successives d'itération pour obtenir une valeur de plus en plus précise.

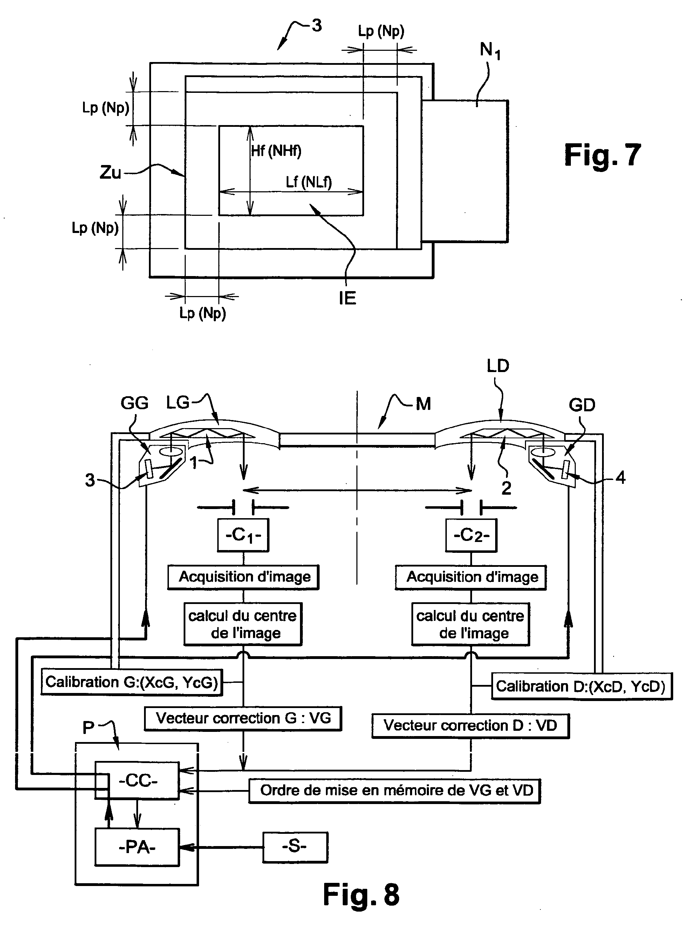

La figure 7 est une vue de face d'un écran miniature conforme à l'invention.

Il est important de dimensionner la taille de la zone utile ZU de l'écran 3. En effet, celle-ci détermine au moment de l'alignement la plage de réglage disponible. Il faut donc la déterminer de façon à être sûr de toujours disposer d'assez de pixels pour déplacer l'image de façon à réaliser la fusion entre l'image gauche I1 et l'image droite I2.

Cette plage de réglage dépend du budget de tolérance opto-mécanique du système pour la fusion entre les deux images et des caractéristiques du système optique d'agrandissement de l'image, par exemple l'imageur 1.

Il est possible de traduire cette plage en course de déplacement de l'image. Le calcul dépend des spécificités du système opto-mécanique. Son résultat final est directement translatable pour notre système puisque le nombre de pixels supplémentaires nécessaires de chaque côté est égal à :

$$Np = Delta\ /\ Pitch\_\mu D$$

lorsque la course de l'écran s'exprime sous la forme +/- delta.

En pratique, la valeur de Delta et/ou celle de Pitch, et donc celle de Np selon l'axe X peut différer de celle selon l'axe Y de l'écran miniature.

L'écran a donc la géométrie de surface active représentée sur la figure 7 où :

$$Lp = Np \cdot Pitch\_\mu D$$

$$Hf = NHf \cdot Pitch\_\mu D$$

$$Lf = NLf \cdot Pitch\_\mu D$$

NHf et NLf étant les dimensions du format à afficher en pixels, par exemple respectivement 480 et 640 s'il s'agit d'un format VGA.

Dans la portion de la zone utile ZU où l'image IE n'est pas affichée, les pixels sont adressés de sorte qu'ils soient opaques et noirs.

Il convient également de vérifier que la sensibilité du réglage par translation de pixels est capable vis-à-vis des tolérances finales de fusion des images virtuelle I1 et I2.

Si alpha est l'angle de disparité maximal tolérable, alors, on exprime la capabilité du système de réglage électronique de fusion par :

$$C = EFLpipe \cdot alpha\ /\ Pitch\_\mu D$$

Où EFL est la focalité effective et $Pitch\_\mu D$ la taille de pixel.

A titre d'exemple, EFL = 20 mm, alpha = 0.5 $\Delta$, $Pitch\_\mu D$ = 10 $\mu$m et on obtient une capabilité du système C = 9, ce qui est un bon résultat.

Si on souhaite une capabilité de 4 au minimum, il faudra choisir un écran dont la taille de pixel est inférieure à 22,5 $\mu$m.

La figure 8 représente le même protocole d'algorithme d'alignement que précédemment illustré sur la figure 5, mais appliqué à un autre type d'afficheur binoculaire.

Dans ce qui suit, le mot «lentille» concerne en particulier un verre, correcteur ou non, destiné à être monté dans une monture de lunettes. Un verre de lunette ophtalmique présente des fonctionnalités traditionnelles que sont la correction de la vue, l'anti-reflet, l'anti-salissure, l'anti-rayure, par exemple.

L'invention peut être également appliquée à un afficheur binoculaire avec un imageur 1, 2 intégré dans chaque lentille LG, LD d'une paire de lunettes ophtalmiques, recevant le faisceau optique d'un dispositif de génération de faisceau GG, GD comportant un écran miniature 3, 4 et un agencement de traitement de type à miroir et lentille. C'est alors la monture M qui satisfait les exigences mécaniques du procédé de maintien de l'alignement de l'afficheur binoculaire.

Le banc utilisé est similaire au précédent à la seule différence qu'il est possible faire varier l'écart interpupillaire entre les caméras C1, C2, c'est-à-dire régler la distance entre ces deux caméras.

A chaque valeur de demi écart interpupillaire, correspond une valeur de calibration (Xc, Yc).

Ainsi un ensemble de données (Xc, Yc) = f(demi-écart interpupillaire) est stocké en mémoire dans l'ordinateur de commande du banc d'alignement pour chaque côté droit et gauche à l'issue de la calibration du banc.

Avec ce système, on peut ainsi régler la fusion des images droite et gauche, mais aussi personnaliser complètement la fusion des images droite et gauche en fonction de l'écart interpupillaire du porteur.

Le principe est le même que précédemment, chaque dispositif de génération droit GD et gauche GG ayant sa propre valeur de réglage d'alignement pour un écart interpupillaire donné du porteur avec un vecteur de correction spécifique stocké en mémoire.

La plage de déplacement électronique de l'image sur l'écran est calculée selon le même principe que ci-dessus : on tolérance l'ensemble des variations mécaniques et optiques du système. Le déplacement électronique de l'image les compense, et le maintien en mémoire de la valeur de correction dans une unité de mémoire permet d'assurer que le réglage est correct pour le porteur à chaque utilisation.

Afin d'assurer ceci, on peut ajouter à l'unité de mémoire un système de contrôle et de correction d'erreur. En effet, ces données de réglage sont très importantes pour le confort et la santé visuelle.

On peut également utiliser par exemple un stockage redondant de l'information avec comparaison permanente et code de correction d'erreur.

La mise hors tension ou le remplacement des batteries ne doit pas remettre à zéro l'unité de mémoire dans laquelle est stockée cette information cruciale.

A cette fin, les circuits de commande des lunettes binoculaires sont dotés, soit d'une source d'énergie secondaire, par exemple une batterie secondaire, pour maintenir l'information stockée en mémoire active, soit de composants mémoriels bistables.

Plus généralement, tout dispositif connu de l'homme de l'art pour maintenir une information en mémoire lors d'une mise hors tension pourra être utilisé, par exemple des batteries de type lithium longue durée ou des mémoires ROM, bistables ou autres, ne nécessitant pas d'énergie électrique pour maintenir leur état

L'invention concerne en particulier le pilote P dont il a déjà été question précédemment.

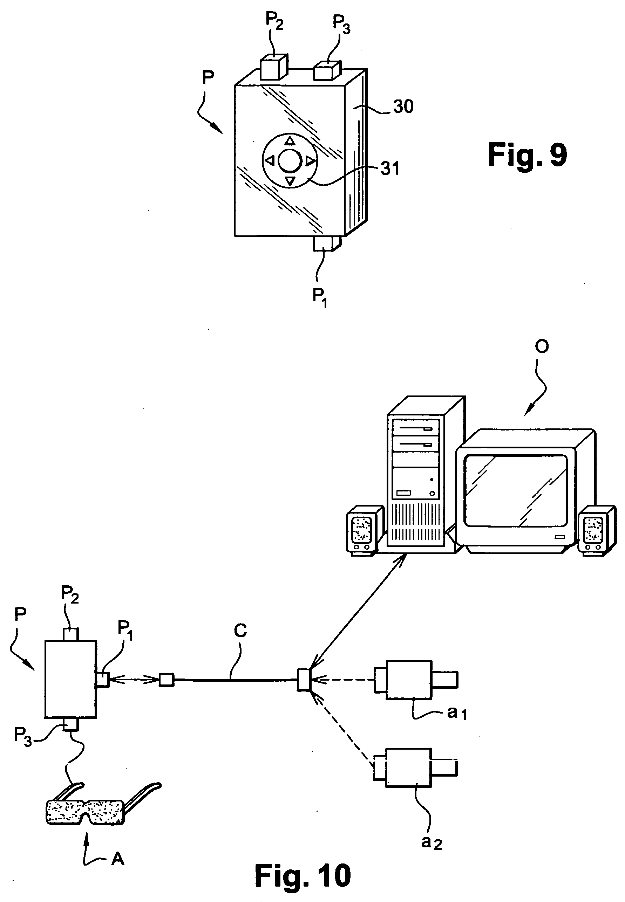

Ce pilote est représenté sur les figures 9 et 10. Il est disposé dans un boîtier 30 et pourvu d'une première connexion P1 de communication avec un ordinateur O, par exemple une embase USB femelle destinée à accueillir une connexion USB correspondante C, d'une deuxième connexion P2 d'entrée de données provenant d'une source d'images S, par exemple une embase femelle prévue pour accueillir une source vidéo analogique ou numérique externe et d'une troisième connexion P3 aux dits écrans, droit et gauche, de l'afficheur A. L'ordinateur O peut être de préférence l'ordinateur de commande du banc d'alignement 20 ou un autre ordinateur ayant en mémoire les données de l'ordinateur de commande du banc d'alignement 20.

La connexion de l'ordinateur, de la source d'images et de l'afficheur avec le pilote peut se faire par câble ou sans câble, par une liaison de type « wireless ».

Ce boîtier a par exemple la forme d'un parallélépipède rectangle, par exemple de dimensions maximales 90 mm en longueur, 55 mm en largeur et 10 mm en hauteur. Son poids maximum peut être de 200 g.

Le pilote peut également en variante être intégré au boîtier d'un agencement de génération d'images solidaire, de façon amovible ou non, d'un afficheur A.

Le pilote comporte également un agencement d'actionnement 31 du type manette de sélection multidirectionnelle qui permet à l'utilisateur de configurer les fonctionnalités du pilote. Un bouton est prévu sur le boîtier du pilote P permettant de verrouiller cet agencement d'actionnement, afin d'empêcher toute action indésirable.

Cet agencement d'actionnement 31 fait partie d'une interface homme machine permettant à un utilisateur de sélectionner un profil de compensation personnalisé. Cette interface homme machine peut permettre également à un utilisateur de sélectionner un mode de désentrelacement.

La première connexion P1 permet également de raccorder le pilote à une source d'alimentation en courant continu ou alternatif, via un adaptateur d'alimentation USB approprié a1, a2.

Comme il a été vu plus haut, le pilote comporte un circuit de compensation CC et un circuit de déplacement 24 d'affichage d'une image IM transmise par ladite source S au circuit d'affichage PA du dit écran.

Le circuit de compensation est constitué essentiellement d'une CPU (« Computing Processing Unit ») qui gère le fontionnement général du pilote et qui assure :

- une initialisation à la mise en tension du pilote et une réinitialisation en cas de changement de valeurs,
- une fonction de gestion de la communication USB avec l'ordinateur O,
- une fonction de gestion de fichiers,
- une fonction de gestion du rebouclage video,

- une fonction de gestion de la compensation électronique,
- la fonction de gestion de l'interface homme machine déjà évoquée.

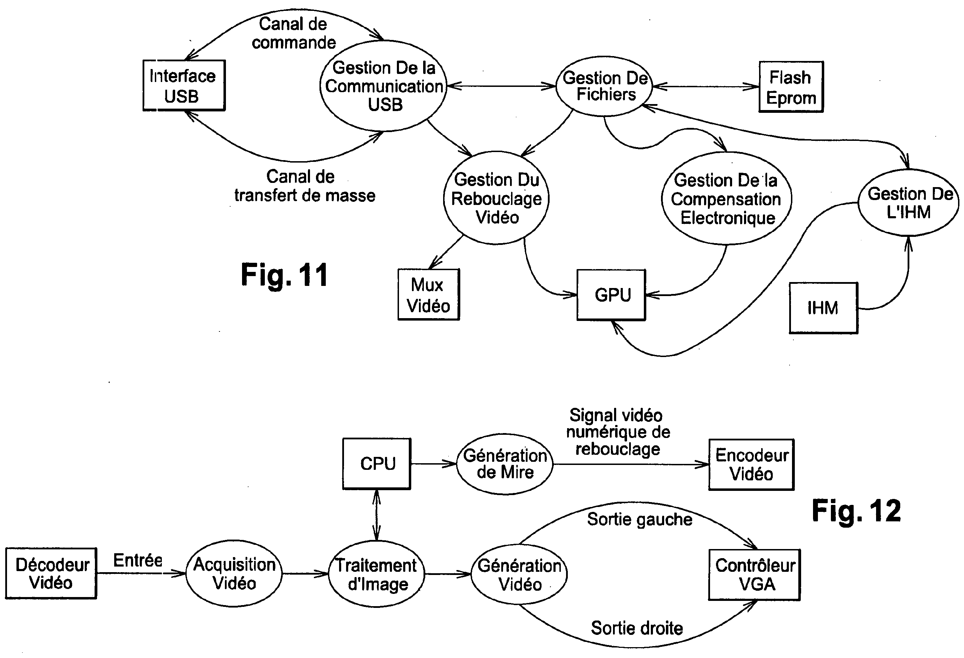

Ces fonctions de la CPU vont être détaillées en référence à la figure 11 qui est un diagramme des flux de données de cette dernière.

La fonction de gestion de la communication USB permet la communication avec l'ordinateur O. Elle lui fournit les différents descripteurs d'information du pilote qui sont contenus dans le code exécutable du micro logiciel de la fonction CPU, et met en place un protocole applicatif de communication au moyen de deux canaux de communication USB bidirectionnels, un canal de commande qui permet à l'ordinateur de configurer et d'inspecter des fonctions du pilote, et un canal de transfert de masse qui est dédié principalement aux transferts d'images entre l'ordinateur et le pilote.

La fonction de gestion de fichiers permet de stocker des fichiers dans des mémoires vives flashs, de lire des images stockées dans ces mémoires, de rechercher des fichiers stockés dans ces mémoires et de supprimer des fichiers stockés dans ces mémoires.

La fonction de gestion de rebouclage video permet de tester la chaîne complète d'acquisition, de traitement et de génération vidéo du pilote en l'absence d'un signal vidéo externe. Elle consiste à générer un signal vidéo avec une image fixe de test et à l'injecter en amont de la chaîne d'acquisition vidéo via un multiplexeur « Mux Vidéo ». Elle élabore la commande de ce multiplexeur. Elle assure le chargement de cette image de test transmise par l'ordinateur, la stocke dans une mémoire ROM du pilote, la rapatrie et la fait lire par les mémoires flashs, via la gestion de fichiers.

La fonction de gestion de la compensation électronique rapatrie et lit les données d'un fichier contenant des données de paramètres de compensation électronique et de paramètres des formules permettant de recalculer les valeurs des vecteurs de compensation, ce qui permet d'effectuer un contrôle d'erreur fiable sur le contenu du fichier, stockées dans les mémoires flashs, via la gestion de fichiers.

La mise en mémoire des paramètres de compensation associe un identifiant d'utilisateur dans un profil de compensation personnalisé.

Afin de vérifier et de garantir l'intégrité des données de compensation lors de chaque utilisation de l'afficheur, cette fonction effectue systématiquement à l'initialisation du système un contrôle d'erreur correctif sur le contenu de ce fichier par défaut.

Le principe du contrôle d'erreur correctif est le suivant.

Lors de la préparation de l'afficheur, le fichier est redondé et copié à la fois dans deux mémoires flashs ORD et BRD, via le bus USB.

A l'initialisation du système, la fonction de gestion de la compensation électronique rapatrie et lit les données des deux fichiers redondants par défaut stockés dans les mémoires et recalcule pour chacun d'eux les composantes des vecteurs de compensation recalculés gauche et droite en utilisant par exemple les formules suivantes :

$$V_{g\,ORD/BRD} = -\begin{pmatrix} E\big[\mathrm{E}\big((Xi_g - Xc_g).Rx_g.\cos(\alpha c_g)\big) + \mathrm{E}\big((Yi_g - Yc_g).Ry_g.\sin(\alpha c_g)\big)\big] \\ E\big[-\mathrm{E}\big((Xi_g - Xc_g).Rx_g.\sin(\alpha c_g)\big) + \mathrm{E}\big((Yi_g - Yc_g).Ry_g.\cos(\dot{\alpha c_g})\big)\big] \\ \alpha c_g \end{pmatrix}_{ORD/BRD}$$

$$V_{d\,ORD/BRD} = -\begin{pmatrix} E\big[\mathrm{E}\big((Xi_d - Xc_d).Rx_d.\cos(\alpha c_d)\big) + \mathrm{E}\big((Yi_d - Yc_d).Ry_d.\sin(\alpha c_d)\big)\big] \\ E\big[-\mathrm{E}\big((Xi_d - Xc_d).Rx_d.\sin(\alpha c_d)\big) + \mathrm{E}\big((Yi_d - Yc_d).Ry_d.\cos(\alpha c_d)\big)\big] \\ \alpha c_d \end{pmatrix}_{ORD/BRD}$$

.

avec :

$V_g$ **ORD/BRD,** $V_d$ ORD/BRD sont les vecteurs de compensation recalculés gauche et droite pour les mémoires respectivement ORD et BRD

$\alpha Cg$, $\alpha C_d$ sont les angles de compensation gauche et droite,

$Xi_g$, Yig, $Xi_d$, $Yi_d$ sont les positions des centres des mires repérées sur les images gauche et droite issues des lunettes binoculaires,

$Xc_g$, $Yc_g$, $Xc_d$, $Yc_d$ sont les positions des centres des mires repérées sur les images gauche et droite issues des de la mire de calibration du banc,

Rx$_g$, Ry$_g$, Rx$_d$, Ry$_d$ sont les paramètres de grandissement gauche et droite.

On définit les vecteurs de compensation stockés en mémoire ORD et BRD comme étant :

$$VCG_{ORD/BRD} = \begin{pmatrix} DX\_G \\ DY\_G \\ TETA\_G \end{pmatrix}_{ORD/BRD} \quad \text{et} \quad VCD_{ORD/BRD} = \begin{pmatrix} DX\_D \\ DY\_D \\ TETA\_D \end{pmatrix}_{ORD/BRD}$$

Le boîtier est en fonctionnement nominal si et seulement si :

$$VCG_{ORD} = VCG_{BRD} \text{ et } VCD_{ORD} = VCD_{BRD}$$

Le boîtier est dans un fonctionnement d'erreur rattrapable si et seulement si :

- le cas 1 est faux,

et
la formule permet de retrouver les valeurs stockées dans l'une des deux mémoires, c'est-à-dire :

$$V_{g\,ORD} = VCG_{ORD} \text{ et } V_{d\,ORD} = VCD_{ORD}$$

ou

$$V_{g\,BRD} = VCG_{BRD} \text{ et } V_{d\,BRD} = VCD_{BRD}$$

On remplace alors le fichier de la mémoire défectueuse par le fichier de la mémoire correcte
Dans tous les autres cas, il est procédé comme suit.

Si $V_g = \begin{pmatrix} DX\_G \\ DY\_G \end{pmatrix}$ et $V_d = \begin{pmatrix} DX\_D \\ DY\_D \end{pmatrix}$ pour les deux fichiers redondants, alors les données de compensation sont considérées comme valides et le traitement d'erreur est terminé.

Si $V_g \neq \begin{pmatrix} DX\_G \\ DY\_G \end{pmatrix}$ ou $V_d \neq \begin{pmatrix} DX\_D \\ DY\_D \end{pmatrix}$ pour l'un des deux fichiers FPCE redondants, alors la fonction de gestion de la compensation électronique écrase le fichier erroné stocké en mémoire flash et le remplace par le fichier redondant valide.

Si $V_g \neq \begin{pmatrix} DX\_G \\ DY\_G \end{pmatrix}$ ou $V_d \neq \begin{pmatrix} DX\_D \\ DY\_D \end{pmatrix}$ pour les deux fichiers redondants, alors les données de compensation sont considérées comme invalides et un message « ERROR » s'affiche sur fond noir au centre des écran miniatures.

Si l'un des deux fichiers redondants est valide, la fonction de gestion de compensation électronique transmet ensuite à une fonction GPU (« Graphical Processing Unit ») les données nécessaires au traitement de la vidéo, à partir des paramètres de compensation valides.

Le pilote comprend donc un multiplexeur « Mux Video » déjà évoqué qui effectue un multiplexage analogique entre le signal d'entrée vidéo provenant de la connexion P2 et le signal de rebouclage vidéo généré par un encodeur vidéo. Le signal vidéo résultant du multiplexage est transmis à un décodeur vidéo. La commande du multiplexage est élaborée par la CPU.

Le pilote comprend également ce décodeur vidéo qui effectue l'acquisition du signal vidéo analogique de sortie du multiplexeur, et convertit ce signal dans un format vidéo numérique standard traitable par la GPU. Le décodeur vidéo bascule automatiquement entre les modes PAL et NTSC, en fonction de la nature du signal vidéo d'entrée.

Si l'entrée vidéo se fait directement dans un format numérique, la fonction de décodage vidée n'existe pas. La GPU traite alors directement le format numérique transmis par le multiplexeur. Les formats numériques n'étant cependant pas encore très standardisés, il est considéré dans la suite de la description que c'est un signal analogique qui est reçu de la source d'informations S.

Le circuit de déplacement 24 d'affichage est constitué essentiellement de la GPU déjà évoquée qui assure :

- une fonction d'acquisition vidéo,
- une fonction de traitement d'image,
- une fonction de génération vidéo,
- une fonction de génération de mire.

Ces fonctions de la GPU vont être détaillées en référence à la figure 12 qui est un diagramme des flux de données de cette dernière.

La GPU détecte en permanence la présence d'un signal vidéo valide en sortie d'un décodeur vidéo. S'il n'y a pas de signal ou si le signal vidéo est invalide, un message « NO SIGNAL » s'affiche sur fond noir au centre des écrans miniatures.

La GPU avertit également la CPU dès qu'elle détecte ou qu'elle perd un signal vidéo valide, afin que la CPU puisse rafraîchir instantanément les valeurs en conséquence.

La fonction d'acquisition vidéo effectue en temps réel l'acquisition du signal vidéo numérique issu de la sortie du décodeur A/N du décodeur vidéo.

La tâche d'acquisition consiste à extraire les données d'images du signal vidéo et à les préparer pour la fonction de traitement d'image liée à la CPU.

La fonction de traitement d'image effectue en continu et en temps réel la compensation électronique de l'afficheur par la méthode de déplacement électronique de l'image vidéo sur les surfaces actives des écrans miniatures.

La correction optique par compensation électronique consiste à appliquer en continu et en temps réel sur chaque image vidéo acquise par la fonction d'acquisition vidéo, un traitement d'image distinct pour chaque chaîne vidéo gauche et droite. Le résultat du traitement est transmis à la fonction de génération vidéo pour envoi aux contrôleurs graphiques.

Les chaînes vidéo gauche et droite subissent le même algorithme de traitement d'image, mais les paramètres de l'algorithme sont propres à chaque chaîne vidéo.

La fonction de traitement d'image effectue dans l'ordre les opérations suivantes :

- désentrelacement commun aux deux chaînes vidéo,
- conversion de définition commune aux deux chaînes vidéo
- rotation propre à chaque chaîne vidéo,
- translation propre à chaque chaîne vidéo.

La compensation électronique est activée automatiquement après la phase d'autotest du pilote.

La compensation électronique réalisée par la fonction de traitement d'image peut être activée ou inhibée. Lorsque la compensation électronique est inhibée, seules les opérations de rotation et de translation sont désactivées : ces deux opérations sont alors mises en mode by-pass, et l'image vidéo envoyée en sortie est la résultante de l'opération de centrage.

La compensation électronique est activée automatiquement par défaut dès la mise sous tension de l'appareil.

Lors de la visualisation d'une séquence vidéo comportant des sujets ou un fond en mouvement, des défauts de type stries peuvent apparaître à l'image si la vidéo a subi un entrelacement TV (à la source, ou lors d'un post-encodage) et n'a pas été désentrelacée ensuite.

Afin de résoudre ce problème, le pilote peut intégrer une fonctionnalité de désentrelacement évoluée, permettant de passer du mode vidéo entrelacé au mode vidéo progressif en corrigeant les pertes dues à l'entrelacement TV.

Les opérations de compensation (translation et rotation) sont définies dans un plan affine euclidien dont le repère orthonormé (Ox, Oy) présente les caractéristiques suivantes :

- l'axe Oy du repère est parallèle aux côtés gauche et droit de la surface active de l'écran miniature,
- l'origine O du repère est le centre de la surface active de l'écran miniature.

Afin de ne pas cumuler des erreurs de position, les paramètres de translation et de rotation sont exprimés en absolu par rapport à la position de référence de l'image vidéo utile réduite, qui correspond à la position pour laquelle l'image vidéo utile est centrée dans la surface active de l'écran miniature après réduction de définition.

Donc une fois réduite, l'image vidéo utile est systématiquement centrée dans la surface de travail avant de subir les opérations de rotation et de translation propres à chaque chaîne vidéo.

Une fois l'image vidéo utile centrée, la fonction de traitement d'image effectue si nécessaire une compensation des défauts angulaires entre les images gauche et droite en inclinant l'image vidéo utile sur la surface active des écrans miniatures.

L'inclinaison de l'image utile est définie dans le repère orthonormé (Ox, Oy) de la surface de travail par une rotation affine de centre O et d'angle θ.

L'opération de rotation est distincte à chaque chaîne vidéo.

Les paramètres de la rotation sont stockés dans les fichiers.

Après l'éventuelle opération de rotation, la fonction de traitement d'image effectue si nécessaire l'alignement en déplaçant en horizontal et/ou en vertical l'image vidéo utile sur la surface active des écran miniatures.

Le déplacement de l'image utile est défini dans le repère orthonormé de la surface de travail par une translation de vecteur $V_t = \begin{pmatrix} \delta x \\ \delta y \end{pmatrix}$.

Les paramètres de la translation sont stockés dans les fichiers.

La fonction de génération vidéo encode en temps réel au format Square Pixel les images vidéo gauche et droite générées par la fonction de traitement d'image, et transmet les signaux vidéo issus de l'encodage aux contrôleurs graphiques d'un contrôleur VGA.

La fonction de génération de mire permet de générer une image statique au format VGA (640p (I) x 480p (h)) dans un format vidéo numérique compatible avec l'encodeur vidéo.

Le pilote comporte trois mémoires flashs dont certaines déjà évoquées, les mémoires Flash ORD (« Original Redondant Drive ») et BRD (« Backup Redondant Drive ») qui sont des mémoires redondantes contenant entre autres le fichier de configuration système et les fichiers déjà évoqués, et une mémoire Flash MSD (« Mass Storage Drive ») qui est une mémoire de stockage de masse contenant entre autres les mires de test utilisées pour la fonction de rebouclage vidéo.

Le pilote comporte également une fonction alimentation qui produit les signaux d'alimentation nécessaires aux fonctions électroniques du pilote et gère la recharge électrique d'une batterie.

L'alimentation fournie par le bus USB et représentée sur la figure 10 est utilisée principalement pour le rechargement électrique in situ de la batterie du pilote, c'est-à-dire sans avoir la nécessité d'ouvrir le boîtier et d'en extraire la batterie.

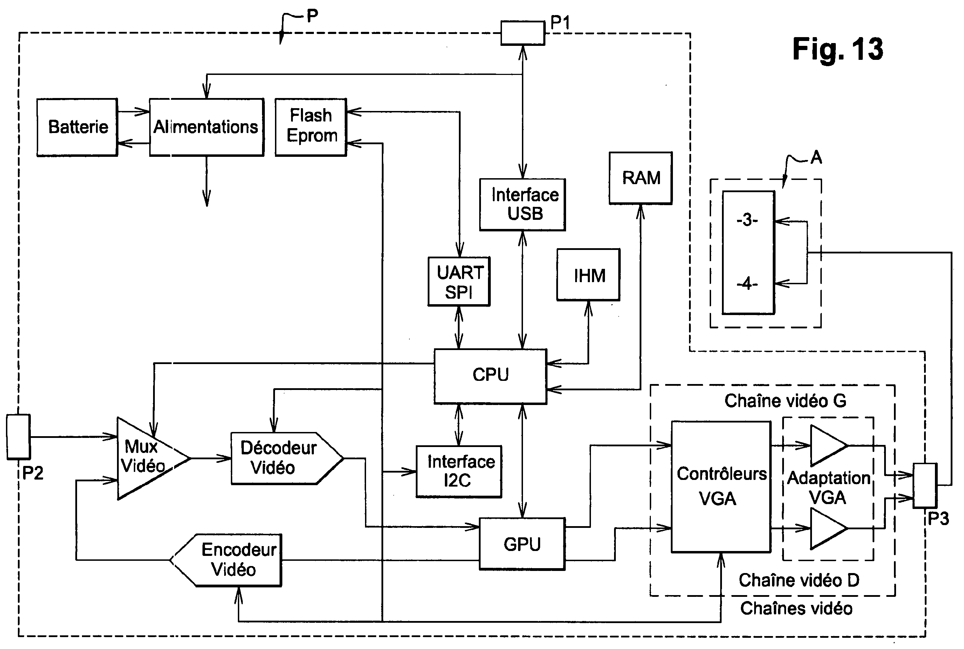

La figure 13 est un diagramme synoptique électronique du pilote P conforme à l'invention connecté à un afficheur A.

Sont représentées sur cette figure la première connexion P1 de communication avec un ordinateur O ou 20 associée à son interface USB, la deuxième connexion P2 d'entrée de données provenant d'une source d'images S, et la troisième connexion P3 aux dits écrans, droit 4 et gauche 3, de l'afficheur A.

Il est à noter que la source d'images S peut être séparée du pilote P comme ici représenté, mais elle peut également être intégrée à l'architecture électronique du pilote et être contenue dans le même boîtier.

Les composants essentiels déjà évoqués ainsi que leurs connexions sont également représentés, à savoir la CPU, la GPU, le multiplexeur « Mux Vidéo », le décodeur vidéo, l'encodeur vidéo, l'interface homme machine « IHM », les contrôleurs graphiques « VGA », l'ensemble de mémoires « Flash Eprom » et « RAM », la batterie et les alimentations.

Dans le cas où le décodeur vidéo n'est pas intégré physiquement à la CPU, comme ici représenté, le décodeur doit être configurable par protocole I2C, via un bus réseau I2C arbitré par la fonction I »interface I2C ».

La mémoire de stockage de masse contenant entre autres les mires de test est interfacée par une interface « UART SPI » via un bus rapide de type SPI.

**Revendications**

1. Pilote (P) d'écrans miniatures d'un afficheur binoculaire (A) comprenant des écrans miniatures (3, 4) et, pour chaque oeil du porteur, un imageur optique (1, 2) destiné à mettre en forme des faisceaux optiques correspondant à une image de surface déterminée (IE) émise par lesdits écrans miniatures (3, 4) et à les diriger vers chaque oeil du porteur pour permettre la visualisation d'un contenu informationnel contenu dans une image virtuelle (I1, I2) et un ordinateur associé, ledit pilote étant disposé dans un boîtier et pourvu

- d'une première connexion (P1) de communication avec ledit ordinateur (O, 20), où sont gardés en mémoire des paramètres de compensation nécessaires à un déplacement de l'image émise sur les écrans, afin d'obtenir une position réglée de cette image dans ces écrans correspondant à une superposition des deux images virtuelles (I1, I2),
- d'une deuxième connexion (P2) d'entrée de données provenant d'une source d'images (S), et
- d'une troisième connexion (P3) aux dits écrans, droit et gauche, de l'afficheur (A),

et comportant un circuit de compensation (CC) assurant une fonction de gestion de la compensation consistant à mettre en mémoire lesdits paramètres de compensation ainsi que des paramètres de formules de calcul de ces paramètres de compensation et un circuit de déplacement (24) d'affichage d'une image (IM) transmise par ladite source (S) au circuit d'affichage (PA) du dit écran et assurant une fonction de traitement d'image effectuant en continu et en temps réel le déplacement électronique de l'image, **caractérisé en ce que** la mise en mémoire des paramètres de compensation leur associe un identifiant d'utilisateur dans un profil de compensation personnalisé et le pilote comporte une interface homme machine permettant à un utilisateur de sélectionner un profil de compensation personnalisé.

2. Pilote selon la revendication précédente, **caractérisé en ce que** ledit profil de compensation personnalisé correspond à l'écart interpupillaire.

3. Pilote selon la revendication précédente, **caractérisé en ce que** ledit circuit de compensation comprend une CPU.

4. Pilote selon la revendication précédente, **caractérisé en ce que** ladite CPU assure un contrôle d'erreur et de correction desdits paramètres de compensation.

5. Pilote selon la revendication précédente, **caractérisé en ce que** ladite CPU assure également une fonction de gestion de rebouclage vidéo consistant à générer une image fixe de test mise en mémoire au préalable dans le pilote par ledit ordinateur.

6. Pilote selon l'une des revendications précédentes, **caractérisé en ce que** ledit circuit de déplacement comprend une GPU.

7. Pilote selon l'une des revendications précédentes, **caractérisé en ce que** ladite fonction de traitement d'image consiste en une rotation d'image propre à chaque écran miniature et en une translation d'image propre à chaque écran miniature.

8. Pilote selon l'une des revendications précédentes, **caractérisé en ce que** ladite fonction de traitement d'image comporte également un désentrelacement d'image commun aux deux écrans miniatures.

9. Pilote selon la revendication précédente, **caractérisé en ce que** ladite interface homme machine permet à un utilisateur de sélectionner un mode de désentrelacement.

**Patentansprüche**

1. Treiber (P) für Minibildschirme einer binokularen Anzeigeeinrichtung (A), die Minibildschirme (3, 4) und für jedes Auge des Trägers einen optischen Bildgenerator (1, 2), der dazu bestimmt ist, optische Strahlen zu formen, die einem bestimmten Flächenbild (IE) entsprechen, das von den Minibildschirme (3, 4) emittiert wird, und sie zu jedem Auge des Trägers zu lenken, um die Visualisierung eines in einem virtuellen Bild (I1, 12) enthaltenen EDV-Inhalts zu ermöglichen, und einen zugeordneten Computer enthält, wobei der Treiber in einem Gehäuse angeordnet und versehen ist mit

- einer ersten Verbindung (P1) zur Kommunikation mit dem Computer (O, 20), auf dem Kompensationsparameter gespeichert sind, die für eine Verschiebung des emittierten Bilds auf den Bildschirmen notwendig sind, um eine geregelte Stellung dieses Bilds auf diesen Bildschirmen zu erhalten, die einer Überlagerung der zwei virtuellen Bilder (I1, 12) entspricht,
- einer zweiten Verbindung (P2) zur Eingabe von von einer Bildquelle (S) stammenden Daten, und
- einer dritten Verbindung (P3) mit den rechten und linken Bildschirmen der Anzeigeeinrichtung (A),

und eine Kompensationsschaltung (CC), die eine Verwaltungsfunktion der Kompensation gewährleistet, die darin besteht, die Kompensationsparameter sowie Rechenformelparameter dieser Kompensationsparameter zu speichern, und eine Anzeigeverschiebungsschaltung (24) eines Bilds (IM) aufweist, das von der Quelle (S) an die Anzeigeschaltung (PA) des Bildschirms übertragen wird, und die eine Bildverarbeitungsfunktion gewährleistet, die kontinuierlich und in Echtzeit die elektronische Verschiebung des Bilds durchführt, **dadurch gekennzeichnet, dass** das Speichern der Kompensationsparameter ihnen eine Benutzerkennung in einem benutzerangepassten Kompensationsprofil zuordnet, und der Treiber eine Mensch-Maschine-Schnittstelle aufweist, die es einem Benutzer ermöglicht, ein benutzerangepasstes Kompensationsprofil auszuwählen.

2.  Treiber nach dem vorhergehenden Anspruch, **dadurch gekennzeichnet, dass** das benutzerangepasste Kompensationsprofil dem Pupillenabstand entspricht.

3.  Treiber nach dem vorhergehenden Anspruch, **dadurch gekennzeichnet, dass** die Kompensationsschaltung eine CPU enthält.

4.  Treiber nach dem vorhergehenden Anspruch, **dadurch gekennzeichnet, dass** die CPU eine Fehler- und Korrekturkontrolle der Kompensationsparameter gewährleistet.

5.  Treiber nach dem vorhergehenden Anspruch, **dadurch gekennzeichnet, dass** die CPU ebenfalls eine Verwaltungsfunktion der Video-Rückkopplung gewährleistet, die darin besteht, ein stationäres Testbild zu erzeugen, das vorab vom Computer im Treiber gespeichert wird.

6.  Treiber nach einem der vorhergehenden Ansprüche, **dadurch gekennzeichnet, dass** die Verschiebungsschaltung eine GPU enthält.

7.  Treiber nach einem der vorhergehenden Ansprüche, **dadurch gekennzeichnet, dass** die Bildverarbeitungsfunktion aus einer jedem Minibildschirm eigenen Bilddrehung und aus einer jedem Minibildschirm eigenen Bildtranslation besteht.

8.  Treiber nach einem der vorhergehenden Ansprüche, **dadurch gekennzeichnet, dass** die Bildverarbeitungsfunktion ebenfalls eine den zwei Minibildschirmen gemeinsame Bildentschachtelung aufweist.

9.  Treiber nach dem vorhergehenden Anspruch, **dadurch gekennzeichnet, dass** die Mensch-Maschine-Schnittstelle es einem Benutzer ermöglicht, einen Entschachtelungsmodus auszuwählen.

**Claims**

1.  Driver (P) for miniature screens of a binocular display (A) comprising miniature screens (3, 4) and, for each eye of the wearer, an optical imager (1, 2) intended to form optical beams corresponding to a determined surface image (IE) emitted by said miniature screens (3, 4) and to direct them to each eye of the wearer to allow an informational content contained in a virtual image (I1, 12) to be viewed and an associated computer, said driver being arranged in a housing and provided

    - with a first connection (P1) for communication with said computer (O, 20), where there are kept in memory compensation parameters necessary to a displacement of the emitted image on the screens, in order to obtain a controlled position of this image in the screens corresponding to an overlay of the two virtual images (I1, 12),
    - with a second connection (P2) for the input of data from a source of images (S), and
    - with a third connection (P3) to said screens, right and left, of the display (A), and comprising a compensation circuit (CC) ensuring a compensation management function consisting in storing said compensation parameters together with parameters of formulae for calculating these compensation parameters and a circuit (24) for displacing the display of an image (IM) transmitted by said source (S) to the display circuit (PA) of said screen and ensuring an image processing function performing, continuously and in real time, the electronic displacement of the image, **characterized in that** the storage of the compensation parameters associates with them a user identifier in a personalized compensation profile and the driver comprises a human/machine interface making it possible for a user to select a personalized compensation profile.

2.  Driver according to the preceding claim, **characterized in that** said personalized compensation profile corresponds to the interpupillary distance.

3. Driver according to the preceding claim, **characterized in that** said compensation circuit comprises a CPU.

4. Driver according to the preceding claim, **characterized in that** said CPU handles error checking and correction of said compensation parameters.

5. Driver according to the preceding claim, **characterized in that** said CPU also ensures a video loop back management function consisting in generating a fixed test image previously stored in the driver by said computer.

6. Driver according to one of the preceding claims, **characterized in that** said displacement circuit comprises a GPU.

7. Driver according to one of the preceding claims, **characterized in that** said image processing function consists of an image rotation specific to each miniature screen and of an image translation specific to each miniature screen.

8. Driver according to one of the preceding claims, **characterized in that** said image processing function also comprises an image deinterlacing common to the two miniature screens.

9. Driver according to the preceding claim, **characterized in that** said human/machine interface allows a user to select a deinterlacing mode.

**Fig. 1**

**Fig. 2**

**Fig. 3**

**Fig. 4**

**Fig. 5**

**Fig. 6**

Fig. 7

Fig. 8

**Fig. 9**

**Fig. 10**

Fig. 11

Interface USB

Canal de commande

Canal de transfert de masse

Gestion De la Communication USB

Gestion De Fichiers

Flash Eprom

Gestion Du Rebouclage Vidéo

Gestion De la Compensation Electronique

Gestion De L'IHM

Mux Vidéo

GPU

IHM

Fig. 12

CPU

Génération de Mire

Signal vidéo numérique de rebouclage

Encodeur Vidéo

Décodeur Vidéo

Entrée

Acquisition Vidéo

Traitement d'Image

Génération Vidéo

Sortie gauche

Contrôleur VGA

Sortie droite

EP 2 010 955 B1

Fig. 13

EP 2 010 955 B1

## RÉFÉRENCES CITÉES DANS LA DESCRIPTION

**Documents brevets cités dans la description**

- US 5579026 A